(19) **Europäisches Patentamt**

**European Patent Office**

**Office européen des brevets**

(11) **EP 0 792 839 B1**

(12) **EUROPÄISCHE PATENTSCHRIFT**

(45) Veröffentlichungstag und Bekanntmachung des Hinweises auf die Patenterteilung:
**29.12.1999 Patentblatt 1999/52**

(51) Int. Cl.[6]: **C01G 49/06**, C01G 49/08, C09C 1/24

(21) Anmeldenummer: **97102542.4**

(22) Anmeldetag: **17.02.1997**

(54) **Verwendung von synthetischen Eisenrohstoffen zur Herstellung von Eisenoxidpigmenten**

Use of synthetic iron raw materials for the preparation of iron oxide pigments

Utilisation de matières premières ferreuses synthétiques pour la préparation de pigments d'oxyde de fer

(84) Benannte Vertragsstaaten:
**BE DE ES GB IT NL SE**

(30) Priorität: **28.02.1996 DE 19607456**

(43) Veröffentlichungstag der Anmeldung:
**03.09.1997 Patentblatt 1997/36**

(73) Patentinhaber: **BAYER AG**
**51368 Leverkusen (DE)**

(72) Erfinder:
• **Burow, Wilfried, Dr.**
  **47809 Krefeld (DE)**
• **Oehlert, Wolfgang, Dr.**
  **47829 Krefeld (DE)**
• **Pitzer, Ulrike, Dr.**
  **47800 Krefeld (DE)**
• **Bade, Heribert, Dr.**
  **47803 Krefeld (DE)**

(56) Entgegenhaltungen:
**DE-C- 143 517**       **DE-C- 463 773**
**GB-A- 1 226 876**     **US-A- 4 432 803**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft die Verwendung von synthetischen (synthetisch erzeugten) Eisenrohstoffen zur Herstellung von Eisenoxidpigmenten im Penniman- und anderen eisenauflösenden Verfahren.

Eisenoxidfarbpigmente, die als ökologisch unbedenkliche Färbemittel zum Einsatz in Keramiken, Baustoffen, Kunststoffen, Lacken und Papier zum Einsatz kommen, können grundsäztlich in schwarzen, gelben, roten und braunen Farbtönen erhalten werden.

Eisenoxidpigmente erhält man, wie in Ullmann's Encyclopedia of Industrial Chemistry, VCH, Weinheim 1992, Vol. A20, S. 298ff beschrieben, durch Festphasenreaktionen (rote, braune und schwarze Pigmente), Fällungs- und Hydrolysereaktionen von Eisensalzen (gelbe, rote, orange und schwarze Pigmente) sowie durch Oxidation von Eisen mit aromatischen Nitroverbindungen in Gegenwart hydrolysierbarer, mehrwertiger Salze (Lauxprozeß: DE-A 463 773, DE-A 515 758).

Die Festphasenreaktionen werden überwiegend zur Produktion von roten Eisenoxiden aus schwarzen Vorläuferprodukten (durch Kalzination) oder aus $FeSO_4$ (Copperas-Prozeß) angewendet. Die Produktion der schwarzen Vorläuferprodukte erfolgt durch Fällung aus Eisensalzlösungen oder durch den Lauxprozeß. Die Erzeugung von Eisenoxidrotpigmenten durch Abrösten von Eisensulfat ist ein technisch aufwendiger Prozeß, der mit mehreren, nacheinandergeschalteten Waschschritten verbunden ist, bei welchen schwermetallhaltige Abwässer entstehen.

Die Erzeugung von gelben, orangen, roten und schwarzen Eisenoxidpigmenten über den Fällungsprozeß (z.B. US 2 388 659 für Eisenoxidgelbpigmente) aus Eisensalzlösungen und alkalischen Verbindungen in Gegenwart von Luft ist mit dem Nachteil verbunden, daß stöchiometrische Mengen von Neutralsalzen erzeugt werden, die mit dem Abwasser abgeführt oder zeit- und kostenintensiv aufgearbeitet werden müssen.

Der Penniman-Prozeß (z.B. US 1 327 061 und US 1 368 748) reduziert die Menge an Neutralsalzen, die während des Fällungsvorganges entstehen, durch Verwendung von metallischem Eisen als Rohstoff, welches während des Prozesses durch freiwerdende Säure aufgelöst wird.

Der Lauxprozeß stellt die Umsetzung der altbekannten Béchamp-Reaktion in den technischen Maßstab dar. Durch Reduktion von aromatischen Nitroverbindungen mit metallischen Eisenrohstoffen gelingt es bei geeigneter Reaktionsführung, das neben der aromatischen Aminoverbindung zwangsweise entstehende Eisenoxid in Pigmentqualität zu erhalten. Der Lauxprozeß ist ein kostengünstiges und ökologisch unbedenkliches Verfahren zur Erzeugung von Eisenoxidpigmenten, da aufgrund der Verwendung von metallischen Eisenrohstoffen keine Basen zur Fällung des Eisenoxids benötigt werden und daher keine Neutralsalze als zu entsorgende Nebenprodukte entstehen.

Mit dem Penniman- und dem Lauxprozeß stehen somit zur direkten Erzeugung von Eisenoxidpigmenten zwei kostengünstige, ökologisch unbedenkliche Verfahren zur Verfügung, die als Rohstoff metallisches Eisen verwenden.

Die Rohstoffe für diese beiden Prozesse sind Nebenprodukte anderer Industriezweige: Als Eisensalzlösungen (z.B.: $FeCl_2$, $FeSO_4$) werden Beizlaugen aus der Stahlindustrie oder Eisensulfat aus der $TiO_2$-Produktion eingesetzt. Die metallischen Eisenrohstoffe sind in allen Fällen Sekundärrohstoffe aus der metallverarbeitenden Industrie (Schrotte). Je nach Anforderung des gewählten Prozesses können diese Schrotte in Form von Lochbutzen, Stiften- oder Nagelspitzen, Blechen, Paketen oder Spänen vorliegen.

Die Verwendung dieser Schrotte zur Erzeugung von Eisenoxidpigmenten ist mit erheblichen Nachteilen verbunden, da es sich nicht um einen definierten Rohstoff handelt. Die Schrotte können sowohl in ihrer chemischen Zusammensetzung wie auch in ihrer Reaktivität in den Prozessen erhebliche Schwankungen aufweisen.

Daher liegt es nahe, die mit den Sekundärrohstoffen verbundenen Qualitätsmängel und -schwankungen durch den Einsatz von synthetisch erzeugten (synthetischen) Eisenrohstoffen zu eliminieren. Synthetische Eisenrohstoffe sind:

Roheisen
Gußeisen
Spiegeleisen
Stähle
Eisen-/Stahlpulver

Dabei ist es aus wirtschaftlichen Gründen sinnvoll, nur solche Eisenrohstoffe einzusetzen, die in großen Mengen für andere Industriebereiche erzeugt werden und daher in ausreichender Menge zur Verfügung stehen.

Ausgewählte, synthetische Eisenrohstoffe sollten folgendes Eigenschaftsprofil aufweisen:

1. günstiges Förderverhalten
2. leichte Dosierbarkeit
3. vollständiges Auflösen während des Prozesses
4. geringe Dotier- und Fremdmetallgehalte

5. prozeß- und rekationsgerechtes Auflösungsverhalten.

Da synthetische Eisenrohstoffe in stückiger Form (Blöcke, Stäbe, Knüppel, Masseln, Brammen, etc.) oder sehr feinteilig (Pulver) vorliegen oder aus Qualitätsgründen legiert sind, ist der Einsatz von handelsüblichen, synthetischen Eisenrohstoffen in eisenauflösenden Prozessen zur Erzeugung von Eisenoxidpigmenten bisher nicht bekannt. Stükkige, synthetische Eisenrohstoffe sind nur unter erheblichem Aufwand zu fördern und zu dosieren: Darüber hinaus lösen sich stückige, synthetische Eisenrohstoffe in den eisenauflösenden Prozessen zur Pigmentproduktion nur sehr langsam und unvollständig auf. Die Fremdmetallgehalte in diesen Eisenrohstoffen können je nach Einsatzgebiet in den weiterverarbeitenden Industriebereichen stark variieren; je nach Einsatzgebiet können Chrom-, Molybdän-, Vanadium- und/oder Nickel-Gehalte größer 15 Gew.-% vorliegen.

Eisenpulver können zwar leicht gefördert und dosiert werden; je nach Anwendungsgebiet treten jedoch in Eisenpulvern hohe Fremdmetallgehalte auf. Aufgrund ihres Reaktionsverhaltens lösen sich Eisenpulver im Verlauf von eisenauflösenden Pigmentbildungsprozessen zwar vollständig auf jedoch werden infolge der zu hohen Reaktivität bei der Verwendung von Pulvern zur Erzeugung von Eisenoxidpigmenten in eisenauflösenden Prozessen keine Eisenoxidteilchen mit Pigmentcharakter gebildet. Die erhaltenen Teilchen haben eine ungeeignete Teilchengröße und -verteilung und sind überwiegend nicht phasenrein.

Legierte, synthetische Eisenrohstoffe haben neben einer mangelhaften Reaktivität in den eisenauflösenden Prozessen den Nachteil, daß die Legierungselemente in die Eisenoxidteilchen mit eingebaut werden. Der Einbau von Schwermetallen (z.B.: Cr, Mo, V, Ni, Cu, etc.) ist mit Einbußen der coloristischen Eigenschaften der erhaltenen Pigmente verbunden sowie ökologisch bedenklich.

Es wurden daher in eisenauflösenden Prozessen, wie z.B. dem Penniman-Prozeß, zur Herstellung von Eisenoxidpigmenten keine synthetischen Eisenrohstoffe eingesetzt.

Aufgabe war es, Eisenrohstoffe zur Herstellung von Eisenoxidpigmenten in eisenauflösenden Prozessen zur Verfügung zu stellen, die die Nachteile des Standes der Technik (ungünstiges Dosier- und Förderverhalten, unvollständiges Auflöseverhalten, Schwermetallgehalte, geringe Raumzeitausbeuten) nicht aufweisen.

Überraschenderweise wurde gefunden, daß spezielle, synthetische Eisenrohstoffe, nämlich niedriglegierte, sphärische, nahezu isometrische, gegebenenfalls kugel-oder ellipsenförmige Eisenpartikel, die unter anderem als Strahlmittel Verwendung finden, zur Erzeugung von Eisenoxidpigmenten in eisenauflösenden Prozessen geeignet sind und daß sie sowohl gegenüber Sekundärrohstoffen als auch gegenüber den übrigen, synthetischen Eisenrohstoffen Vorteile aufweisen.

Gegenstand der Erfindung ist die Verwendung von synthetischen Eisenrohstoffen, die Sphärische Teilchenform aufweisen, mit einer mittleren Teilchengröße zwischen 0,5 und 100 mm und mit einem metallischen Eisengehalt größer 80 Gew.-% zur Herstellung von Eisenoxidpigmenten in eisenauflösenden Prozessen.

Die mittlere Teilchengröße der synthetischen Eisenrohstoffe liegt besonders bevorzugt zwischen 0,5 und 50 mm oder zwischen 20 und 100 mm (z.B. Eisenschwamm).

Bevorzugt liegt der metallische Eisengehalt der synthetischen Eisenrohstoffe bei größer 85 Gew.-%, besonders bevorzugt bei größer 90 Gew.-%, ganz besonders bevorzugt bei größer 95 Gew.-%.

Der Fremdmetallgehalt der synthetischen Eisenrohstoffe liegt vorzugsweise bei kleiner 15 Gew.-%, besonders bevorzugt bei kleiner 10 Gew.-%, insbesondere bei kleiner 7 Gew.-% und ganz besonders bevorzugt bei kleiner 3 Gew.-%.

Im Regelfall sind die synthetischen Eisenrohstoffe je nach Anwendungsfall mit folgenden Fremdelementen dotiert: Si, C, Mn, Cr, Ni, V, Mo, Cu, W, Ti, P, N, Co. Diese Fremdmetalle können auch Verbindungen mit dem Eisen eingehen (z.B. C als $Fe_3C$-Zementit) und so das Eisen binden.

Der Rest (auf 100 Gew.-%) in den synthetischen Eigenrohstoffen, welcher nicht als metallisches Eisen, eisenhaltige Verbindung oder Fremdmetall vorliegt, kann aus Eisenoxiden unterschiedlicher Zusammensetzung (z.B. FeO, $Fe_2O_3$, $Fe_3O_4$) bestehen.

Die bevorzugten synthetischen Eisenrohstoffe sind durch folgende Eigenschaften charakterisiert:

| | |
|---|---|
| 1. mittlere Teilchengröße: | 0,5 bis 100 mm |
| 2. Teilchengrößenverteilung: | zwischen einem Viertel und dem vierfachen der mittleren Teilchengröße liegen 80 Gew.-% der Teilchen |
| 3. metallischer Eisengehalt: | >80 Gew.-% |
| 4. Fremdmetallgehalt: | <15 Gew.-% |

Die bevorzugten synthetischen Eisenrohstoffe weisen die folgenden, günstigen Eigenschaften auf:

1. Sie zeigen ein günstiges Förderverhalten.
2. Sie sind leicht dosierbar.

3. Sie lösen sich in den eisenauflösenden Pigmentbildungsprozessen nahezu vollständig auf.

4. Sie haben niedrige Fremdmetallgehalte.

5. Sie weisen in den Pigmentbildungsprozessen ein günstiges Reaktionsverhalten auf.

Überraschenderweise übertreffen die bevorzugten synthetischen Eisenrohstoffe in ihrem Reaktionsverhalten die bislang eingesetzten Sekundärrohstoffe. Man erhält bei verbesserten Raumzeitausbeuten im Penniman- und im Lauxprozeß Produkte mit günstigen Pigmenteigenschaften. Auf diesem Weg erhaltene Gelbpigmente (siehe Beispiele) zeigen gegenüber solchen, die herkömmlich erzeugt wurden, Vorteile in der Purtonlackabtestung im CIELAB-Farbwert b*, der ein Maß für den qualitätsbestimmenden Gelbanteil des Farbtons darstellt.

Die Purtonbestimmung der Farbwerte der unter Verwendung der synthetischen Eisenrohstoffe hergestellten Pigmente sowie der Pigmente aus den Vergleichsbeispielen wird in L 64 thixotroper Paste (nichthärtendes Alkydharz der Fa. Bayer AG) bei einer Pigmentvolumenkonzentration von 10 % durchgeführt. Die Einarbeitung des Pigmentes in die Paste erfolgt auf einer Tellerfarbenausreibmaschine mit 240 mm Durchmesser bei einer Belastung von 25 kg. Pigment und Paste werden während 100 Umdrehungen der Tellerfarbenausreibmaschine unter mehrmaligem Öffnen des Gerätes und Sammlung des Gemisches dispergiert.

Die farbliche Auswertung der Pigmente erfolgt in Alkydal L 64 thixotrop (nichthärtendes Alkydharz der Fa. Bayer AG) bei einer Pigmentvolumenkonzentration von 10 %. Die Bestimmung der Remissionswerte und CIELAB-Daten (DIN 5033, Teil 7) erfolgt mit einem Meßgerät mit Ulbrichtkugel (Beleuchtungsbedingungen d/8°, Normlichtart C/2°) unter Einschluß der Oberflächenreflektion. Die erhaltenen Remissionswerte werden nach DIN 5033, Teil 3 in das CIELAB-Farbdatensystem umgerechnet. Die Bestimmung der relativen Farbabstände kann nach DIN 6174 bzw. ISO 7724, 1-3 drafts durch Vergleich einer Probe mit einer festgelegten Referenzsubstanz erfolgen.

Man berechnet entsprechend DIN 6174 (ISO 7724) die relativen Farbabstände der Pigmentproben gegen einen mit herkömmlichen Sekundärrohstoffen hergestellten Bezug.

Die Bestimmung des metallischen Eisengehaltes der verwendeten synthetischen Eisenrohstoffe erfolgt mit Hilfe der Wasserstoffmethode:

## 1. Apparatur

Gasentwicklungsapparatur: 250 ml Rundkolben, 50 ml Meßtropftrichter mit Gasableitung und Gaskappe zur Stickstoffzuleitung, 1 000 ml Gassammelgefäß (Meßtropftrichter) mit Graduierung und Hahn, Vakuumanschluß, pneumatische Wanne (3 l) mit Thermometer, 500 ml Meßzylinder, Heizpilz für 250 ml Rundkolben.

## 2. Arbeitsvorschrift

In eine pneumatische Wanne wird Wasser eingefüllt. In einem 250 ml Rundkolben werden ca. 2 g der zu bestimmenden Probe de synthetischen Eisenrohstoffes eingewogen. Nach Zugabe von 250 ml destilliertem Wasser wird der Rundkolben in den Heizpilz gesetzt, und es wird ein Meßtropftrichter mit Gasableitung aufgesetzt. Der Inhalt des Rundkolbens wird bis zum Sieden erhitzt und auf Temperatur gehalten. Sobald keine Gasblasen mehr an der Spitze der Gasableitung austreten, werden 40 ml verdünnte Salzsäure (ca. 10 %ig) in den Tropftrichter gefüllt, der Tropftrichter mit einer Gaskappe verschlossen und die Gasableitung von unten in das Gassammelgefäß eingeführt. Das Ende des Stickstoffschlauchs wird in einen 500 ml Meßzylinder, der zu ca. 2/3 mit Wasser gefüllt ist, gesteckt, damit ein Gegendruck erzeugt wird. Das Gassammelgefäß wird durch Anlegen eines Vakuums vollständig mit Wasser gefüllt. Die Salzsäure wird tropfenweise in den Rundkolben gegeben. Die Lösung im Rundkolben solang bei schwachem Sieden erhitzt, bis die Wasserstoffentwicklung beendet ist.

## 3. Meßwerte

Volumen des im Gassammelgefäß verdrängten Wassers **(V)**
Abstand des Wasserstands im Gassammelgefäß und in der Wanne **(h)**
Wassertemperatur **($T_w$)**
Raumtemperatur **(T)**
Luftdruck **($P_{Luft}$)**

### 4. Berechnung

$$\text{Druck } (P) = P_{Luft} - P_{hydrostat.} - P_{H20}$$

$P_{Luft}$ = Luftdruck; $P_{hydrostat.}$ = h × 0,0736 (hydrostatischer Druck), $P_{H20}$ = Wasserdampfdruck (s. Tabellenwerk)

normalisiertes Volumen (V°):     P×V×273/R×T×760
Gehalt (Fe$_{met.}$):     2,000 g Einwaage entsprechen 803,3 ml Wasserstoff (bei einem Gehalt von 100 % an metallischem Eisen)

metallischer Eisengehalt in der Probe des synthetischen Eisenrohstoffes:

$$\text{Fe}_{met.} = V° \times 100/803,3 \times (\text{Einwaage}/2)$$

Die Erfindung soll anhand der nachfolgenden Beispiele näher erläutert werden. Die Beispiele sollen der Illustration der Verwendung der synthetischen Eisenrohstoffe bei den an sich bekannten Pigmentherstellungsverfahren dienen und stellen keine Einschränkung dar. Nachfolgend wird die Erzeugung von Eisenoxidgelbpigmenten beschrieben, die unter den für den Fachmann bekannten Bedingungen (pH<4,5) in eisenauflösenden Prozessen (Penniman- und/oder Lauxverfahren) erzeugt werden.

Die Phasenbildung der Eisenoxidpigmente in eisenauflösenden Prozessen ist pH-Wert gesteuert; im sauren pH-Bereich (<4,5) wird $\alpha$-FeOOH gebildet, im schwach sauren pH-Bereich (ca. 4,5-5,5) werden $\gamma$-FeOOH und $\alpha$-Fe$_2$O$_3$ erzeugt, im Bereich >5 ist die Bildung von Fe$_3$O$_4$ bevorzugt, wobei dem Fachmann überlassen bleibt, unter welchen exakten Bedingungen $\gamma$-FeOOH, $\alpha$-Fe$_2$O$_3$ oder Fe$_3$O$_4$ bei Verwendung der synthetischen Eisenrohstoffe hergestellt werden.

### Pennimanverfahren

### 1. Beschreibung der Apparatur

9,2 l-Edelstahltopf mit einem knapp über dem Boden angeordneten Begasungsring, einem Blattrührer, einem Steuerungsthermoelement, einer pH-Elektrode, einem Glasdeckel und einem Rückflußkühler.

### 2. Herstellung der Keimsuspension

Eine wäßrige Lösung von Eisen-(II)-sulfat mit 150 g/l FeSO$_4$ wird mit soviel 25 %iger Natronlauge unter Rühren versetzt, daß 40 % des Eisens als Eisen-(II)-hydroxid gefällt werden können. Durch Begasung mit Luft bei 35°C wird Fe(II) zu Fe(III) oxidiert; dabei fällt der pH-WErt von 7 auf 3.

### 3. Beschreibung der Pigmentaufbaureaktion

Eingesetzter Keim: $\alpha$-FeOOH mit einer spezifischen Oberfläche von 59 m$^2$/g.
Es werden 9 l Keimsuspension mit einem Gehalt von 7,0 g/l $\alpha$-FeOOH und einem FeSO$_4$-Gehalt von 40 g/l sowie 650 g metallischer Eisenrohstoff vorgelegt, die Suspension wird unter Rühren bei 200 Upm auf 85°C aufgeheizt und dann unter weiterem Rühren mit 200 l/h Luft begast. Nach bestimmten Oxidationszeiten werden Proben von im Mittel 250 ml Volumen gezogen. Nach 82 Stunden wird die Reaktion abgestellt.
Von den Proben wird der $\alpha$-FeOOH-Gehalt bestimmt. Aus dem $\alpha$-FeOOH-Gehalt nach bestimmten Oxidationszeiten und dem eingesetzten $\alpha$-FeOOH-Keimgehalt wird der Vervielfältungsfaktor VVF gemäß folgender Formel berechnet:

$$VVF = Gehalt\ \alpha\text{-FeOOH (Probe)} / Gehalt\ \alpha\text{-FeOOH (Keim).}$$

In der nachfolgenden Tabelle sind die in den Beispielen eingesetzten, metallischen Eisenrohstoffe charakterisiert.

Tabelle 1

| | Form | Teilchengröße | metallisches Eisen | Fremdmetallgehalt |
|---|---|---|---|---|
| Vergleichsbeisp. 1 | unregelmäßig geformte Blechstücke | Fläche: 10-50 cm², Dicke: 1-3 mm | 98 % | <10 % |
| Vergleichsbeisp. 1 | unregelmäßig geformte Blechstücke | Fläche: 10-50 cm², Dicke: 0,3 mm | 94 % | <10 % |
| Beispiel 1 | kugel- und ellipsenförmig | 0,25-4 mm | 95 % | <10 % |

Die Laufzeiten bei Probennahme, die ermittelten Vervielfältigungsfaktoren (VVF) und die gemessenen CIELAB-Farbwerte $\Delta b^*$ sind in den nachfolgenden Tabellen für die einzelnen Beispiele aufgeführt. Als Bezug wurde das im Vergleich zu den erfindungsgemäß hergestellten Pigmenten gleichartig aufgebaute Pigment (VVF=25,5), welches unter Verwendung von herkömmlichen Sekundärrohstoffen (Blechschrott) erhalten wurde, festgelegt.

Die Proben werden nach den üblichen Methoden filtriert, salzfrei gewaschen und bei 90°C/15 h in einem Trockenschrank getrocknet; anschließend werden die CIELAB-Farbwerte entsprechend der oben angegebenen Methode bestimmt.

## Tabelle 2

Laufzeiten, VVF und CIELAB-Farbwert $\Delta b^*$ der Vergleichsbeispiele 1 und 2 und des Beispiels 1

| Vergleichsbeispiel 1 | | | Vergleichsbeispiel 2 | | |
|---|---|---|---|---|---|
| Laufzeit/[h] | VVF | $\Delta b^*$ | Laufzeit/[h] | VVF | $\Delta b^*$ |
| 37 | 7,4 | | 36 | 14,2 | 1,4 |
| 43 | 9,0 | | 40 | 14,8 | 1,3 |
| 46 | 9,5 | | 44 | 15,5 | 1,1 |
| 61 | 13,8 | 0,8 | 61 | 19,8 | 0,7 |
| 79 | 19,6 | 0,3 | 68 | 22,6 | 0,6 |
| 89 | 25,5 | $0,0^+$ | 80 | 23,8 | 0,5 |
| ( $^+$ = B e z u g ) | | | | | |

| Beispiel 1 | | |
|---|---|---|
| Laufzeit/[h] | VVF | $\Delta b^*$ |
| 39 | 14,4 | 1,7 |
| 45 | 15,7 | 1,5 |
| 52 | 20,0 | 1,1 |
| 59 | 23,1 | 0,8 |
| 67 | 24,3 | 0,6 |
| 71 | 25,4 | 0,6 |
| 73 | 26,4 | 0,6 |

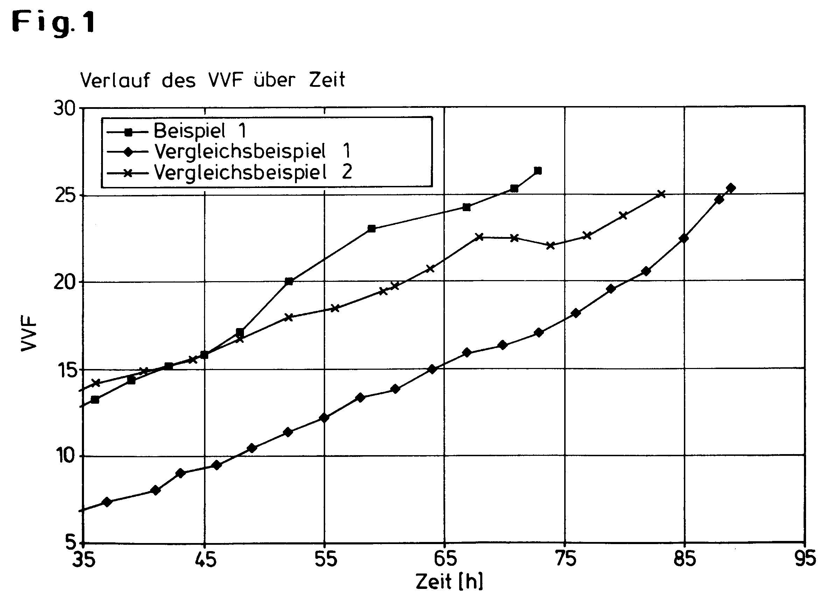

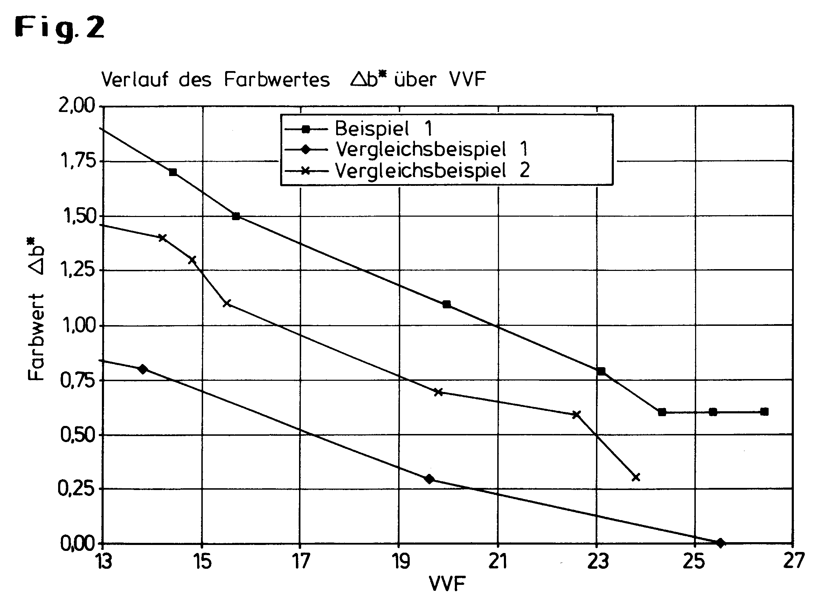

Die Abbildungen 1 (VVF gegen die Laufzeit) und 2 ($\Delta$b* gegen VVF) verdeutlichen, daß die synthetischen, metallischen Eisenrohstoffe gegenüber dem Stand der Technik (herkömmlicher Blechschrott) Vorteile in der Raumzeitausbeute wie auch bei vergleichbaren Raumzeitausbeuten Vorteile im qualitätsrelevanten CIELAB-Farbwert b* gegenüber Blechschrott aufweisen.

**Lauxverfahren:**

Anhand der nachfolgenden Beispiele soll die Verwendung von synthetischen Eisenrohstoffen zur Erzeugung von Eisenoxidgelbpigmenten nach dem Lauxverfahren beispielhaft beschrieben werden, wobei der Fachmann die Wahl der technischen Aggregate oder der zusätzlichen Einsatzstoffe je nach Bedarf variieren kann. Eisenoxidpigmente, die durch Reaktion von metallischen Eisenrohstoffen mit Nitrobenzol erhalten werden, werden gemäß dem Lauxverfahren hergestellt, das in den Patenten DE 463 773, DE 464 561 und DE 515 758 beschrieben ist. Durch Variation der zusätzlichen Einsatzstoffe kann der Fachmann die im Lauxverfahren erhältlichen Eisenoxidphasen ($\alpha$-FeOOH, $\gamma$-Fe$_2$O$_3$, $\alpha$-Fe$_2$O$_3$ oder Fe$_3$O$_4$) bestimmen. Ausgehend von dem in den Patenten beschriebenen Verfahren werden in druckfesten, mit Rührern ausgestatteten Kesseln folgende Stoffe umgesetzt:

Tabelle 4

| Stoffe und Verfahrensparameter des Vergleichsbeispiels 3 und des Beispiel 2 Kessel-größe: 2 Liter) | | Vergleichsbeispiel 3 | Beispiel 2 |
|---|---|---|---|
| **Parameter** | | **Vergleichsbeispiel 3** | **Beispiel 2** |
| 1. Phase | FeCl$_2$-Lösung/[l] | 0,12 | 0,124 |
| | H$_2$O/[l] | 0,05 | 0,046 |
| | AlCl$_3$ (160 g/l)/[l] | 0,055 | 0,055 |
| | metallischer Eisenrohstoff/[kg] | 0,08 | 0,08 |
| | Nitrobenzol/[l] | 0,095 | 0,095 |
| | | | |
| 2. Phase | metallischer Eisenrohstoff/[kg] | 0,352 | 0,568 |
| | Nitrobenzol/[l] | 0,240 | 0,408 |
| | H$_2$O/[l] | 0,6 | 0,6 |
| | Laufzeiten bis 100 % Umsatz/[h] | 7 | 6 |

In der nachfolgenden Tabelle sind die in den Beispielen eingesetzten, metallischen Eisenrohstoffe charakterisiert.

Tabelle 5

| Charakterisierung der eingesetzten, metallischen Eisenrohstoffe | | | | |
|---|---|---|---|---|
| | Form | Teilchengröße | metallisches Eisen | Fremdmetallgehalt |
| Vergleichsbeispiel 3 | stift- und nagelförmige Metallstücke | Länge: 10-50 mm<br>Dicke: 0,5-1 mm | 98 % | < 15 % |
| Beispiel 2 | kugel- und ellipsenförmig | 0,25 - 4 mm | 95 % | < 15 % |

**Probenaufbereitung:**

In einem 300 ml Becher werden ca. 200-250 g Pigmentpaste mit 50 ml frisch destilliertem Anilin versetzt, mit einem Pastenlöffel gerührt und anschließend das Anilin abdekantiert. Der Vorgang wird so oft wiederholt, bis das Anilin nach dem Verrühren klar und farblos ist. Anschließend wird die gewaschene Paste in eine 2 Liter Weithalsflasche gegeben und mit Trinkwasser unter kräftigem Schütteln aufgeschlämmt. Zur Abtrennung von überschüssigem Eisen und Grobanteil wird die Suspension über ein 40 μm Sieb gegeben. Die erhaltene Suspension wird über einen Büchnertrichter, der mit Filterpapier ausgelegt wird, mit Vakuum abfiltriert. Sobald die Flüssigkeit abgesaugt ist, wird die Paste auf dem Filter ca. 3-4 mal mit jeweils 250 ml Trinkwasser übergossen, um lösliche Salze auszuwaschen.

Die stichfeste Pigmentpaste wird 1 Stunde bei 170°C im Trockenschrank getrocknet. Das getrocknete Pigment wird durch ein 2 mm Sieb gestrichen und anschließend in das Bindemittelsystem (L 64 thix. -s.o.-) eingearbeitet.

Als Bezug wurde das Pigment, welches unter Verwendung von herkömmlichen Sekundärrohstoffen (Stiften- und Nagelspitzen) erhalten wurde, festgelegt.

Tabelle 6

| Laufzeiten bis 100 % Nitrobenzolumsatz und CIELAB-Farbwerte Δb* des Vergleichsbeispiels 3 und des Beispiels 2 | | | | |
|---|---|---|---|---|
| | Laufzeiten bis 100 % Nitrobenzolumsatz [h] | Pigmentauswaage / [g] | Raumzeitausbeute / [g/l*h] | CIELAB-Farbwert Δb* |
| Vergleichsbeispiel 3 | 7 | 563 | 40,2 | $0,0^+$ (+=Bezug) |
| Beispiel 2 | 6 | 845 | 70,4 | 9,0 |

Die Ergebnisse, die in Tabelle 6 aufgeführt sind, zeigen, daß die Verwendung des synthetischen, metallischen Eisenrohstoffes im Vergleich zu den herkömmlich verwendeten Sekundärrohstoff mit Vorteilen in der Raumzeitausbeute wie auch im qualitätsbestimmenden CIELAB-Farbwert b* verbunden ist.

**Patentansprüche**

1. Verwendung von synthetischen Eisenrohstoffen, die sphärische Teilchenform aufweisen, mit einer mittleren Teilchengröße zwischen 0,5 und 100 mm und mit einem metallischen Eisengehalt größer 80 Gew.-% zur Herstellung von Eisenoxidpigmenten in eisenauflösenden Prozessen.

2. Verwendung von synthetischen Eisenrohstoffen gemäß Anspruch 1, dadurch gekennzeichnet, daß die mittlere Teilchengröße der synthetischen Eisenrohstoffe zwischen 0,5 und 50 mm liegt.

3. Verwendung von synthetischen Eisenrohstoffen gemäß Anspruch 1, dadurch gekennzeichnet, daß die mittlere Teilchengröße der synthetischen Eisenrohstoffe zwischen 20 und 100 mm liegt.

4. Verwendung von synthetischen Eisenrohstoffen gemäß einem oder mehreren der Ansprüche 1 bis 3, dadurch gekennzeichnet, daß der metallische Eisengehalt des synthetischen Eisenrohstoffes größer 85 Gew.-% ist.

5. Verwendung von synthetischen Eisenrohstoffen gemäß Anspruch 4, dadurch gekennzeichnet, daß der metallische Eisengehalt größer 90 Gew.-% ist, bevorzugt größer 95 Gew.-%.

6. Verwendung von synthetischen Eisenrohstoffen gemäß einem oder mehreren der Ansprüche 1 bis 5, dadurch gekennzeichnet, daß der Fremdmetallgehalt des synthetischen Eisenrohstoffes kleiner 15 Gew.-% ist.

7. Verwendung von synthetischen Eisenrohstoffen gemäß Anspruch 6, dadurch gekennzeichnet, daß der Fremdmetallgehalt des synthetischen Eisenrohstoffes kleiner 10 Gew.-% ist.

8. Verwendung von synthetischen Eisenrohstoffen gemäß Anspruch 7, dadurch gekennzeichnet, daß der Fremdmetallgehalt des synthetischen Eisenrohstoffes kleiner 7 Gew.-% ist, besonders bevorzugt kleiner 3 Gew.-%.

**Claims**

1. Use of synthetic iron raw materials, the particles of which are spherical, with an average particle size between 0.5 and 100 mm and with a metallic iron content greater than 80 wt.% to prepare iron oxide pigments in iron-dissolution processes.

2. Use of synthetic iron raw materials in accordance with claim 1, characterised in that the average particle size of the synthetic iron raw material is between 0.5 mm and 50 mm.

3. Use of synthetic iron raw materials in accordance with claim 1, characterised in that the average particle size of the synthetic iron raw material is between 20 and 100 mm.

4. Use of synthetic iron raw materials in accordance with one or more of claims 1 to 3, characterised in that the metallic iron content of the synthetic iron raw material is greater than 85 wt.%.

5. Use of synthetic iron raw materials in accordance with claim 4, characterised in that the metallic iron content is greater than 90 wt.%, preferably greater than 95 wt.%.

6. Use of synthetic iron raw materials in accordance with one or more of claims 1 to 5, characterised in that the foreign metal content of the synthetic iron raw material is less than 15 wt.%.

7. Use of synthetic iron raw materials in accordance with claim 6, characterised in that the foreign metal content of the synthetic iron raw material is less than 10 wt.%.

8. Use of synthetic iron raw materials in accordance with claim 7, characterised in that the foreign metal content of the synthetic iron raw material is less than 7 wt.%, preferably less than 3 wt.%.

**Revendications**

1. Utilisation de matières premières synthétiques contenant du fer dont les particules présentent une forme sphérique, possédant une granulométrie moyenne entre 0,5 et 100 mm et possédant une teneur en fer métallique supérieure à 80% en poids pour la préparation de pigments d'oxydes de fer dans des procédés de dissolution du fer.

2. Utilisation de matières premières synthétiques contenant du fer selon la revendication 1, caractérisée en ce que la granulométrie moyenne des matières premières synthétiques contenant du fer se situe entre 0,5 et 50 mm.

3. Utilisation de matières premières synthétiques contenant du fer selon la revendication 1, caractérisée en ce que la granulométrie moyenne des matières premières synthétiques contenant du fer se situe entre 20 et 100 mm.

4. Utilisation de matières premières synthétiques contenant du fer selon une ou plusieurs des revendications 1 à 3, caractérisée en ce que la teneur en fer métallique de la matière première synthétique contenant du fer est supérieure à 85% en poids.

5. Utilisation de matières premières synthétiques contenant du fer selon la revendication 4, caractérisée en ce que la teneur en fer métallique est supérieure à 90% en poids, de préférence supérieure à 95% en poids.

6. Utilisation de matières premières synthétiques contenant du fer selon une ou plusieurs des revendications 1 à 5, caractérisée en ce que la teneur en métaux étrangers de la matière première synthétique contenant du fer est inférieure à 15% en poids.

7. Utilisation de matières premières synthétiques contenant du fer selon la revendication 6, caractérisée en ce que la teneur en métaux étrangers de la matière première synthétique contenant du fer est inférieure à 10% en poids.

8. Utilisation de matières premières synthétiques contenant du fer selon la revendication 7, caractérisée en ce que la teneur en métaux étrangers de la matière première synthétique contenant du fer est inférieure à 7% en poids, de manière particulièrement préférée inférieure à 3% en poids.

# Fig.1

Verlauf des VVF über Zeit

EP 0 792 839 B1

# Fig.2

Verlauf des Farbwertes △b* über VVF